# EUROPÄISCHE PATENTSCHRIFT

(11) **EP 1 983 308 B1**
(45) Veröffentlichungstag und Bekanntmachung des Hinweises auf die Patenterteilung: **29.02.2012**
(21) Anmeldenummer: 08006725.9
(22) Anmeldetag: 02.04.2008
(51) Int. Cl.: G01D 5/347

(54) **Positionsmesseinrichtung**
Position measuring device
Dispositif de mesure de position

(30) Priorität: 20.04.2007 DE 102007018748
(43) Veröffentlichungstag der Anmeldung: 22.10.2008
(73) Patentinhaber: Dr. Johannes Heidenhain GmbH, 83301 Traunreut (DE)
(72) Erfinder: Mayer, Elmar, 83365 Nussdorf (DE); Oberhauser, Johann, 83377 Vachendorf (DE); Tovar, Heinz, 83313 Siegsdorf (DE)

(56) Entgegenhaltungen:
- EP-A- 1 329 696
- EP-A- 1 403 623
- US-B1- 6 664 535

## Beschreibung

Die Erfindung betrifft eine Positionsmesseinrichtung zur Bestimmung der absoluten Position gemäß dem Anspruch 1.

In vielen Gebieten werden vermehrt absolute Positionsmesseinrichtungen eingesetzt, bei denen die absolute Positionsinformation aus einer Codespur mit in Messrichtung hintereinander angeordneten Codeelementen abgeleitet wird. Die Codeelemente sind dabei in pseudozufälliger Verteilung vorgesehen, so dass eine bestimmte Anzahl von aufeinander folgenden Codeelementen jeweils ein Bitmuster bildet. Bei der Verschiebung der Abtasteinrichtung gegenüber der Codespur um ein einziges Codeelement wird bereits ein neues Bitmuster gebildet und über den gesamten absolut zu erfassenden Messbereich steht eine Folge von unterschiedlichen Bitmustern zur Verfügung.

Ein derartiger sequentieller Code wird als Kettencode oder als Pseudo-Random-Code (PRC) bezeichnet.

In der Veröffentlichung "Absolute position measurement using optical detection of coded patterns", von J.T.M. Stevenson und J.R. Jordan in Journal of Physics E / Scientific Instruments 21 (1988), No. 12, Seiten 1140 bis 1145 ist angeführt, dass jedes Codeelement aus einer vorgegebenen Abfolge zweier Teilbereiche mit zueinander komplementären optischen Eigenschaften besteht.

In der Veröffentlichung ist auf die GB 2 126 444 A hingewiesen. Dort wird nun zur Erzeugung der binären Information bei einer derartigen Manchester-Codierung vorgeschlagen, die analogen Abtastsignale der Codebereiche mit einer vorgegebenen Triggerschwelle zu vergleichen und davon abhängig eine binäre Information 0 oder 1 zu generieren.

Dieser Vergleich mit einer fest vorgegebenen Triggerschwelle hat den Nachteil, dass Schwankungen in den analogen Abtastsignalen zur fehlerhaften Generierung der binären Informationen führen können.

Die EP 1 329 696 A1 offenbart eine Positionsmesseinrichtung, bei der die Manchester-Codierung angepasst wurde, um zusätzlich zu der durch die Codierung gegebenen Absolutposition eine periodische Information zu erhalten. Hierzu besteht jedes Codeelement aus zwei Teilbereichen mit unterschiedlichen Eigenschaften. Ein Teilbereich, d. h., der linke oder der rechte Teilbereich aller Codeelemente ist gleichartig ausgebildet und bildet somit die periodische Information.

Die US 6, 664,535 B1 zeigt eine absolute Positionsmesseinrichtung mit einer groben periodischen Grundteilung zur inkrementalen Positionsmessung und einer zwischen zwei periodisch angeordneten Teilstrichen eingebrachten absoluten Codierung.

In der DE 102 44 235 A1 - von der die Erfindung ausgeht - wird eine Positionsmesseinrichtung beschrieben, deren absolute Codespur aus einer pseudo-zufälligen Anordnung von Codeelementen besteht, die eine Manchester-Codierung aufweisen. Zur Feststellung, ob die Abtastsignale von Detektorelementen gültige Werte aufweisen, wird zum einen vorgeschlagen, Abtastsignale einer Inkrementalspur, die zur absoluten Codespur parallel verläuft, zur Auswahl der zur Auswertung der Absolutspur nötigen Detektorelemente zu nutzen. Zum anderen wird angeregt, zur Bewertung der Zuverlässigkeit der Detektorsignale die Detektorelemente in eine Gruppe mit geradzahlig nummerierten und eine Gruppe mit ungeradzahlig nummerierten Detektorelementen aufzuteilen und jeweils Differenzsignale direkt aufeinander folgender Detektorelemente jeder Gruppe zu bilden und mit einem Vergleichswert zu vergleichen. Der Positionswert wird schließlich aus den gültigen Abtastsignalen, die aus dem Vergleich resultieren, gebildet. Eine vergleichbare Positionsmesseinrichtung mit einer Manchester-Codierung ist in der EP 1 403 623 A1 beschrieben.

Der Erfindung liegt die Aufgabe zugrunde, die Zuverlässigkeit bzw. Betriebssicherheit einer absoluten Positionsmesseinrichtung weiter zu verbessern. Diese Aufgabe wird durch die Merkmale des Anspruches 1 gelöst.

Es wird nun eine Positionsmesseinrichtung vorgeschlagen, mit einem Code, bestehend aus einer Folge von in einer Messrichtung hintereinander angeordneten Codeelementen, bei dem wenigstens zwei aufeinander folgende Codeelemente jeweils ein Codewort mit einer Positionsinformation bilden und jedes Codeelement aus zwei in Messrichtung aufeinander folgend angeordneten Teilbereichen besteht, die zueinander komplementäre Eigenschaften aufweisen. Die Positionsmesseinrichtung weist darüber hinaus eine Abtasteinrichtung mit Detektorelementen zum Ablesen der wenigstens zwei ein Codewort bildenden Codeelemente des Codes auf, sowie eine Auswerteeinrichtung, in der aus den Abtastsignalen der Detektorelemente das Codewort mit der aktuellen Positionsinformation ermittelbar ist, indem einer ersten Abfolge der komplementär zueinander ausgebildeten Teilbereichen ein erster digitaler Wert und einer zweiten Abfolge ein zweiter digitaler Wert zugeordnet ist. Die Abtasteinrichtung und der Code sind in Messrichtung relativ zueinander beweglich angeordnet. Die Erfindung ist dadurch gekennzeichnet, dass zwischen aneinandergrenzenden Codeelementen, die im Übergangsbereich gleiche Eigenschaften aufweisen und denen somit unterschiedliche digitale Werte zugeordnet sind, Trennelemente mit dazu komplementären Eigenschaften eingefügt sind.

Vorteilhafte Ausgestaltungen der Erfindung sind in den abhängigen Ansprüchen angegeben.

Die Erfindung wird anhand der Zeichnungen näher erläutert, dabei zeigt
- Figur 1: eine Positionsmesseinrichtung in schematischer Darstellung,
- Figur 2: das Prinzip einer Fehlerprüfung,
- Figur 3: die Signale zur Fehlerprüfung gemäß Figur 2,
- Figur 4a: eine erste Abtastposition einer erfindungsge- mäßen Positionsmesseinrichtung,
- Figur 4b: eine zweite Abtastposition einer erfindungsge- mäßen Positionsmesseinrichtung,
- Figur 4c: eine dritte Abtastposition einer erfindungsgemäßen Positionsmesseinrichtung,
- Figur 4d: eine vierte Abtastposition einer erfindungsgemäßen Positionsmesseinrichtung und
- Figur 5: einen Signalverlauf an einem Detektorelement bei einer erfindungsgemäßen Positionsmesseinrichtung.

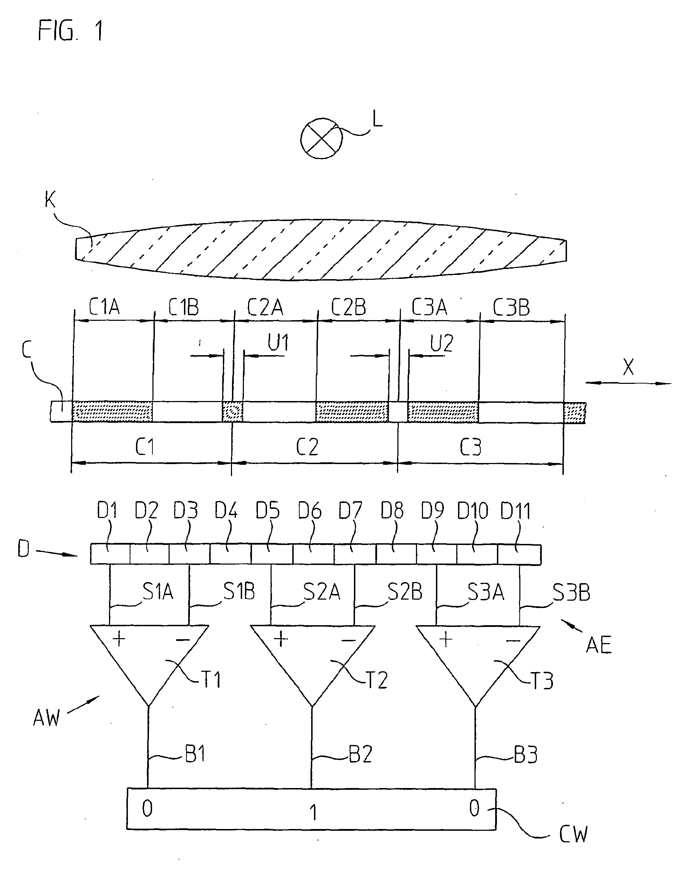

In Figur 1 ist eine erfindungsgemäß ausgestaltete Positionsmesseinrichtung schematisch dargestellt, wobei diese weitgehend einer bereits in der DE 102 44 235 A1 vorgestellten Positionsmesseinrichtung entspricht. Diese Positionsmesseinrichtung arbeitet nach dem optischen Abtastprinzip, bei dem ein Code C im Durchlichtverfahren abgetastet wird. Zur Abtastung des Codes C dient eine Abtasteinrichtung AE, die in Messrichtung X relativ zum Code C bewegbar angeordnet ist.

Der Code C besteht aus einer in Messrichtung X hintereinander angeordneten Folge von gleich langen Codeelementen C1, C2, C3. Jedes Codeelement C1, C2, C3 besteht wiederum aus zwei gleich langen in Messrichtung X nebeneinander unmittelbar aufeinander folgend angeordneten Teilbereichen A und B, die zueinander komplementär ausgebildet sind. Komplementär bedeutet dabei, dass sie inverse Eigenschaften besitzen, also beispielsweise beim optischen Abtastprinzip transparent und nicht transparent bzw. bei Auflicht-Abtastung reflektierend bzw. nicht reflektierend sind.

Der sequentielle Code C wird von der Abtasteinrichtung AE abgetastet, die eine Lichtquelle L enthält, deren Licht über eine Kollimatorlinse K mehrere aufeinander folgende Codeelemente C1, C2, C3 beleuchtet. Das Licht wird von dem Code C positionsabhängig moduliert, so dass hinter dem Code C eine positionsabhängige Lichtverteilung entsteht, die von einer Detektoreinheit D der Abtasteinrichtung AE erfasst wird.

Die Detektoreinheit D ist ein Zeilensensor mit einer in Messrichtung X angeordneten Folge von Detektorelementen D1 bis D11. Aus Gründen der Übersichtlichkeit sind nur so viele Detektorelemente D1 bis D11 gezeichnet, wie notwendig sind, den Code C in der dargestellten Position abzutasten. Jedem Teilbereich A, B der Codeelemente C1, C2, C3 ist in jeder Relativlage zumindest ein Detektorelement D1 bis D11 eindeutig zugeordnet, so dass in jeder Relativlage der Detektoreinheit D gegenüber dem Code C ein Abtastsignal S1A bis S3B aus jedem Teilbereich A, B gewonnen wird. Diese Abtastsignale S1A bis S3B werden einer Auswerteeinrichtung AW zugeführt, welche die beiden Abtastsignale S1A, S1 B; S2A, S2B; S3A, S3B der beiden Teilbereiche C1A, C1B; C2A, C2B; C3A, C3B eines Codeelementes C1, C2, C3 paarweise verarbeitet und für jedes Codeelement C1, C2, C3 einen digitalen Wert bzw. ein Bit B1, B2, B3 erzeugt. Eine Folge mehrerer digitaler Werte B1, B2, B3 ergibt ein Codewort CW welches die absolute Position definiert. Bei einer Verschiebung der Detektoreinheit D gegenüber dem Code C um die Breite bzw. Länge eines Codeelementes C1, C2, C3 wird ein neues Codewort CW erzeugt und über den absolut zu vermessenden Messbereich wird eine Vielzahl von unterschiedlichen Codewörtern CW gebildet.

Figur 1 zeigt eine Momentanstellung des Codes C relativ zur Abtasteinrichtung AE. Die Detektorelemente D1 bis D11 sind aufeinander folgend in einem Abstand mit der halben Breite eines Teilbereiches C1A bis C3B des Codes C angeordnet. Dadurch ist sichergestellt, dass in jeder Position zumindest ein Detektorelement D1 bis D11 einem Teilbereich C1A bis C3B eindeutig zugeordnet ist und nicht einen Übergang zwischen zwei Teilbereichen C1A bis C3B abtastet. In der dargestellten Position wird der Teilbereich C1A vom Detektorelement D1 und der Teilbereich C1B vom Detektorelement D3 abgetastet. Die Detektorelemente D1, D3 erfassen die Lichtverteilung und erzeugen in Abhängigkeit der Lichtintensität ein analoges Abtastsignal S1A, S1B proportional zur Lichtintensität. Da die beiden Teilbereiche C1A und C1 B komplementär zueinander ausgebildet sind, ist auch die Intensität der Abtastsignale S1A und S1 B invers zueinander, die Signalpegel sind also weit voneinander beabstandet.

Dieser Signalabstand wird nun zur Erzeugung der binären Information B1 ausgenutzt, indem geprüft wird, welches der beiden Abtastsignale S1A, S1 B des Codeelementes C1 größer ist. Diese Prüfung kann durch Quotientenbildung oder durch Differenzbildung erfolgen. Am Beispiel wird die Differenzbildung eingesetzt, wozu die Auswerteeinrichtung AW gemäß Figur 1 Vergleichseinrichtungen in Form von Triggerbausteinen T1, T2, T3 enthält. So erzeugt der Triggerbaustein T1 beispielsweise B1 = "0", wenn S1A kleiner S1B und B1 = "1", wenn S1A größer S1B ist. In gleicher Weise werden binäre Informationen B2 und B3 durch Abtastung der Codeelemente C2, C3 und Vergleich der analogen Abtastsignale S2A, S2B; S3A, S3B der Teilbereiche C2A, C2B; C3A, C3B jeweils eines Codeelementes C2, C3 durch Triggerbausteine T2, T3 gewonnen.

Einer ersten Abfolge der komplementär zueinander ausgebildeten Teilbereiche A, B wird also ein erster digitaler Wert und einer zweiten Abfolge der komplementär zueinander ausgebildeten Teilbereiche A, B wird ein zweiter digitaler Wert zugeordnet. Im Beispiel wird der Abfolge opak → transparent der Wert 0 und der Abfolge transparent → opak der Wert 1 zugeordnet.

Da die beiden Teilbereiche A und B jedes Codeelementes C1, C2, C3 zueinander komplementär sind, ist der Störabstand der Abtastsignale S sehr groß. Eine Veränderung der Lichtintensität der Lichtquelle L beeinflusst die Abtastsignale S beider Teilbereiche A und B gleichermaßen.

Aufgrund der komplementären Ausgestaltung jeweils zweier Teilbereiche A, B eines Codeelementes C1, C2, C3 müssen bei korrekter Betriebsweise der Positionsmesseinrichtung durch Abtastung dieser Teilbereiche A, B jeweils analoge Abtastsignale S erzeugt werden, deren Differenzbetrag einen vorgegebenen Wert übersteigt. Durch Beobachtung dieses Differenzwertes ist eine gute Fehlerprüfung möglich. Die Grundlage dieser Fehlerprüfung ist, dass davon ausgegangen werden kann, dass bei Unterschreiten des Differenzwertes um einen vorgegebenen Betrag die binäre Information B1, B2, B3 unsicher ist und daher zu dieser binären Information B1, B2, B3 ein Fehlersignal F erzeugt wird.

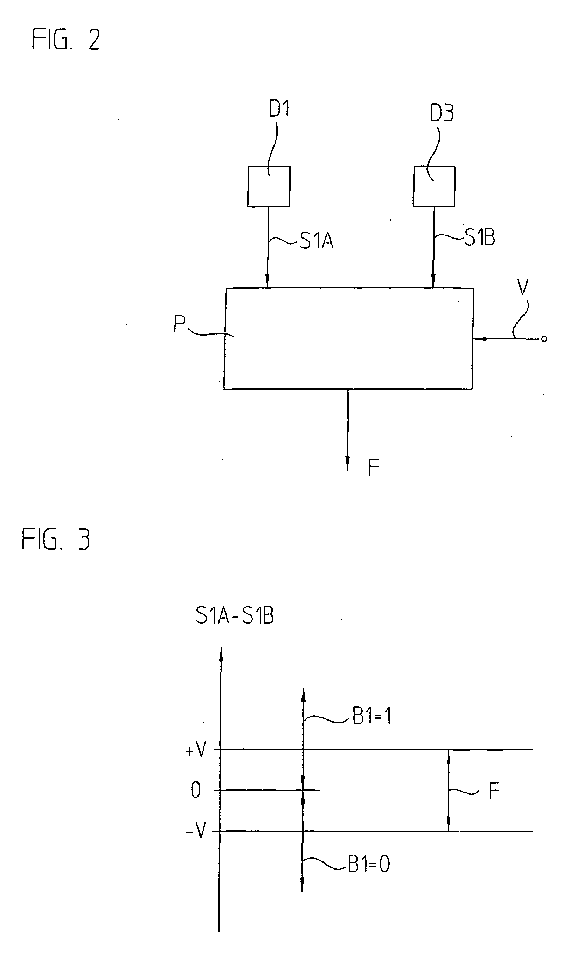

Das Prinzip der Erzeugung des Fehlersignals F ist in Figur 2 dargestellt. Die analogen Abtastsignale S1A und S1B des Codeelementes C1 werden einer Fehlerprüfeinrichtung P zugeführt. Die Fehlerprüfeinrichtung P vergleicht S1A und S1B durch Differenzbildung (S1A - S1B) und prüft, ob der Differenzbetrag einen vorgegebenen Vergleichswert V übersteigt oder nicht übersteigt. Der Vergleichswert V ist mit Vorteil so gewählt, dass bereits ein Fehlersignal F erzeugt wird, wenn eines der für den Vergleich herangezogenen analogen Abtastsignale S1A, S1B betragsmäßig absinkt. Das ist beispielsweise beim Übergang von einem Teilbereich eines Codeelements C1, C2, C3 zum nächsten der Fall, oder beim Übergang von einem Codeelement C1, C2, C3 zum nächsten, wenn die zwei aufeinander folgenden Codeelemente im Übergangsbereich verschiedene Eigenschaften aufweisen. Wenn der Differenzbetrag (S1A - S1B) den vorgegebenen Vergleichswert V nicht übersteigt, wird ein Fehlersignal F ausgegeben. In Figur 3 sind diese Signalverhältnisse dargestellt. Konkret kann die Fehlerprüfeinrichtung P durch einen dem Fachmann bekannten Fensterkomparator gebildet sein.

Mit Vorteil sind die Fehlerprüfeinrichtungen P in die Triggerbausteine integriert. Dabei kann das Fehlersignal F beispielsweise über eine separate Leitung ausgegeben und ausgewertet werden. Alternativ dazu können die Triggerbausteine aber auch so ausgeführt sein, dass die Ausgänge drei Zustände annehmen können, beispielsweise eine positive Spannung für eine logische "1", eine negative Spannung für eine logische "0" und 0 Volt zur Signalisierung eines Fehlersignals F.

Erfindungsgemäß sind nun dort, wo in Messrichtung X Codeelemente C1, C2, C3 aneinandergrenzen, die im Übergangsbereich gleiche Eigenschaften aufweisen, Trennelemente U1, U2 mit dazu komplementären Eigenschaften eingefügt. Handelt es sich beim Code C, wie beispielhaft in Figur 1 dargestellt, um einen seriellen Code, bei dem die einzelnen Codeelemente C1, C2, C3 eine Manchester-Kodierung aufweisen, so trifft das immer dann zu, wenn ein Kodewechsel auftritt, in anderen Worten ausgedrückt, wenn ein Codeelement C1, C2, C3, das einer logischen "1" entspricht, auf ein Codeelement C1, C2, C3 folgt, das einer logischen "0" entspricht und umgekehrt.

Würde ein einfacher serieller Code C verwendet, bei dem die Codeelemente C1, C2, C3 lediglich aus einem Feld mit einer bestimmten Eigenschaft bestehen, wäre das der Fall, wenn zwei gleiche Codeelemente C1, C2, C3 aufeinander folgen (nicht dargestellt).

Unter der Annahme, dass in Figur 1 die Teilbereiche C1B und C2A im Übergangsbereich zwischen den Codeelementen C1 und C2 transparent sind, weist das Trennelement U1 opake Eigenschaften auf. Ebenso weist das Trennelement U2 zwischen den opaken Teilbereichen C2B und C3A im Übergangsbereich zwischen dem Codeelementen C2 und C3 transparente Eigenschaften auf.

In der Praxis werden die Detektorelemente, wie aus der Beschreibung von Figur 1 hervorgeht, paarweise durch Bildung von Differenzsignalen ausgewertet. Dabei ist es wichtig, unterscheiden zu können, welche Detektorelemente bei der jeweiligen Relativposition der Abtasteinheit AE gegenüber dem Code C in Differenz geschaltet einen gültigen Positionswert bilden und welche nicht.

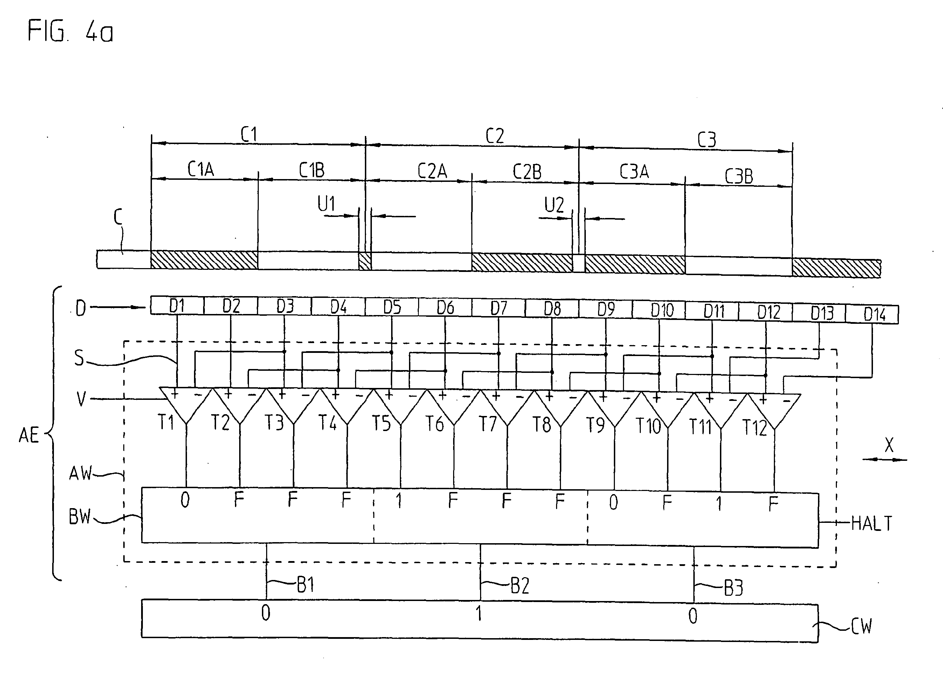

Die Figuren 4a bis 4d zeigen vier Positionen der Abtasteinheit AE gegenüber dem Code C. Die Detektoreinheit D umfasst in diesem Beispiel vierzehn Detektorelemente D1 bis D14, deren Abtastsignale S einer Auswerteeinrichtung AW zugeführt sind. Die Auswerteeinrichtung umfasst zur Verarbeitung der Abtastsignale S zwölf Vergleichseinrichtungen in Form von Triggerbausteinen T1 bis T12, sowie eine Bewertungseinheit BW, an die die Ergebnisse der Auswertung in den Triggerbausteinen T1 bis T12 ausgegeben werden und die nach Bewertung der Eingangssignale das Codewort CW, bestehend aus den Bits B1, B2, B3 als Ergebnis der Abtastung ausgibt.

In welcher Form das Ergebnis ausgegeben wird, ist für die vorliegende Erfindung nicht relevant. So kann die Ausgabe sowohl, wie dargestellt, parallel, als auch seriell erfolgen. Ebenso können zur Ausgabe des Ergebnisses, beispielsweise an eine Werkzeugmaschinensteuerung, noch weitere Bausteine in der Abtasteinheit AE enthalten sein. Weiter sei der Vollständigkeit halber noch erwähnt, dass die Bestandteile der Abtasteinheit AE auch räumlich getrennt angeordnet sein können.

Die Anzahl der Detektorelemente D1 bis D14 ist hier so gewählt, dass an jeder Relativposition der Abtasteinheit AE zum Code C ein zuverlässiges Codewort CW ermittelt werden kann. Dabei wird mit den Triggerbausteinen T1 bis T12 die Differenz von je zwei unmittelbar aufeinander folgenden geradzahligen Detektorelementen D2, D4, D6, D8, D10, D12, D14, sowie von je zwei ungeradzahligen Detektorelementen D1, D3, D5, D7, D9, D11, D13 gebildet und das Ergebnis betragsmäßig mit einem Vergleichswert V verglichen. Die Triggerbausteine T1 bis T12 umfassen somit auch Fehlerprüfeinrichtungen P. Unterschreitet der Betrag des Differenzsignals den Vergleichswert V, wird es als ungültig eingestuft und der entsprechende Triggerbaustein T1 bis T12 gibt ein Fehlersignal F aus. Erreicht oder übersteigt der Betrag des Differenzsignals dagegen den Vergleichswert V, gibt der Triggerbaustein T1 bis T12 einen logischen Wert aus, je nach Polarität des Differenzsignals eine logische "1" oder eine logische "0".

In Figur 4a kann der digitale Wert des Codeelements C1 beispielsweise aus der Differenzschaltung der Abtastsignale der Detektorelemente D1 und D3 mit der Vergleichseinrichtung T1 ermittelt werden, der digitale Wert des Codeelements C2 aus den Abtastsignalen der Detektorelemente D5 und D7 mit der Vergleichseinrichtung T5 und der digitale Wert des Codeelements C3 aus den Abtastsignalen der Detektorelemente D9 und D11 mit der Vergleichseinrichtung T9.

Die geradzahligen Detektorelemente D2, D4, D6, D8, D10, D12, D14 liefern ungültige Abtastsignale, da sie sich entweder in Übergangsbereichen zwischen zwei Codeelementen C1, C2, C3, oder zwischen zwei Teilbereichen C1A, C1B; C2A, C2B; C3A, C3B innerhalb eines Codeelements C1, C2, C3 befinden. Dementsprechend geben die geradzahligen Triggerbausteine T2, T4, T6, T8, T10, T12, die die geradzahligen Detektorelemente D2, D4, D6, D8, D10, D12, D14 auswerten, Fehlersignale F aus, da die erzeugten Differenzsignale jeweils den Vergleichswert V betragsmäßig unterschreiten. Bei den verbleibenden Triggerbausteinen T3, T7 und T11, mit denen die verbleibenden Kombinationen der ungeradzahligen Detektorelemente D1, D3, D5, D7, D9, D11, D13 ausgewertet werden, hängt das Ergebnis der Auswertung von der Abfolge der Codeelemente C1, C2, C3 des Codes C ab. Bei einem Bitwechsel, also einer logischen "0", die auf eine logische "1" folgt, oder umgekehrt, ist das Ergebnis der Auswertung ebenfalls ein Fehlersignal F. In Figur 4a ist das bei den Triggerbausteinen T3 und T7 der Fall. Folgen dagegen zwei gleiche Codeelemente C1, C2, C3 aufeinander, wie es bei dem auf das Codeelement C3 folgenden Codeelement angedeutet ist, so ergibt die Auswertung mit der Vergleichseinrichtung T11 einen gültigen digitalen Wert, im dargestellten Fall eine logische "1".

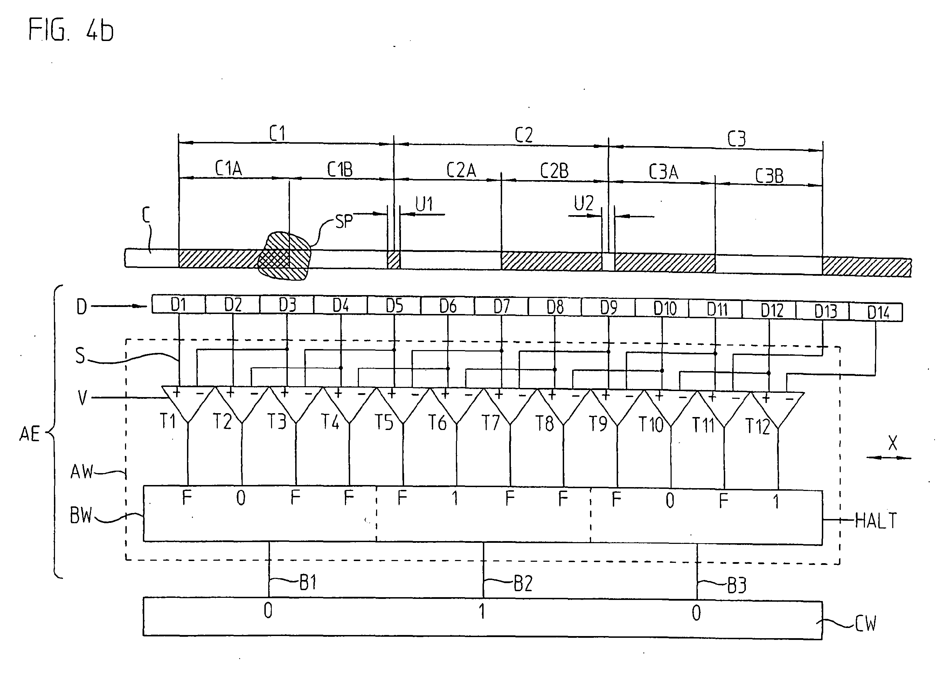

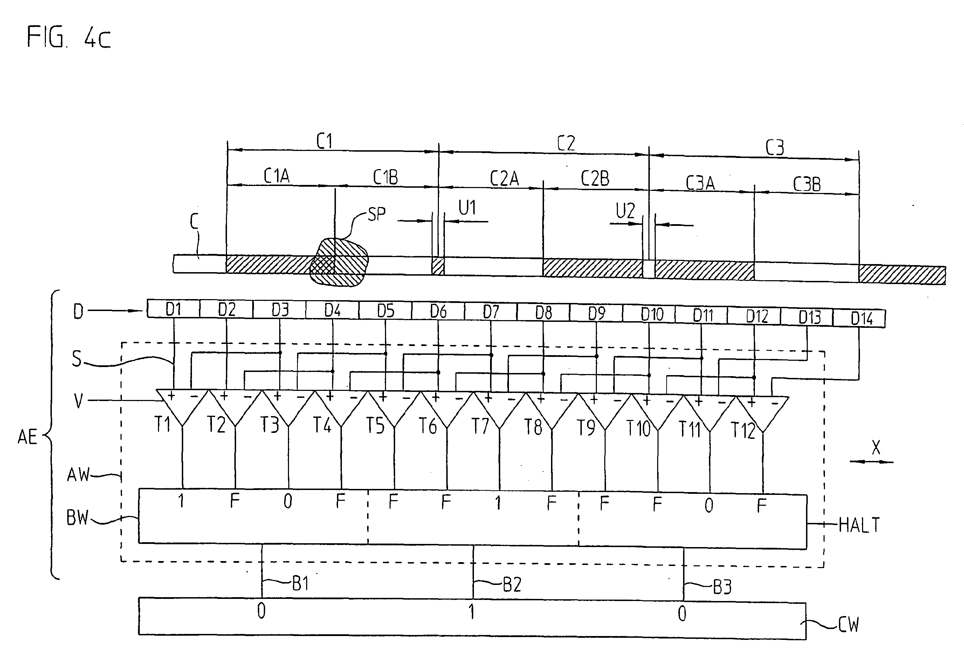

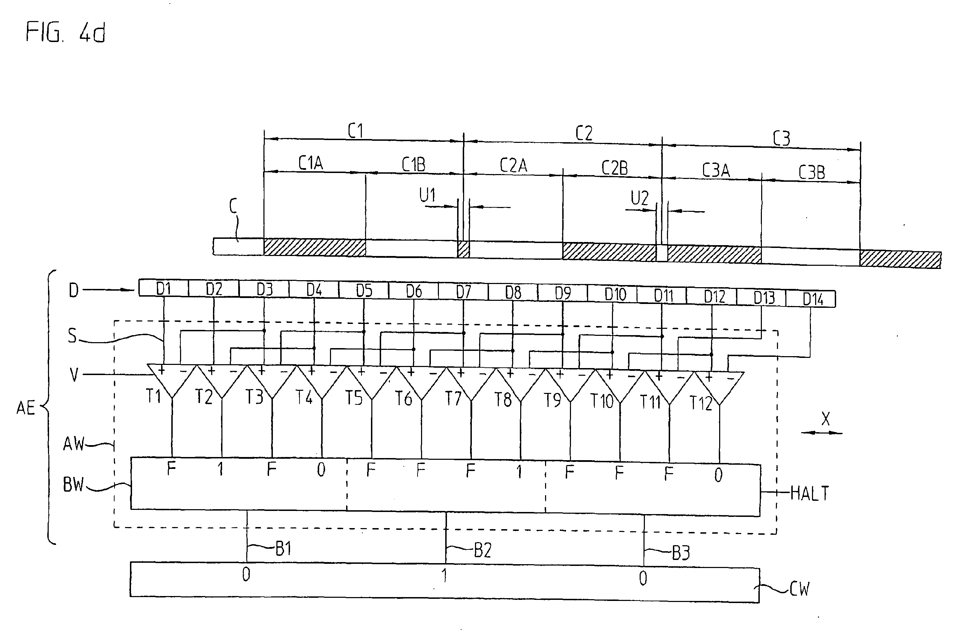

Im vorliegenden Beispiel sind die Detektorelemente D1 bis D14 in Messrichtung X in Abständen entsprechend der halben Länge eines Teilbereiches A, B der Codeelemente C1, C2, C3 angeordnet. Durch die differenzielle Abtastung ergeben sich daraus je nach Relativposition des Codes C zur Abtasteinheit AE für die Abtastung eines Codeelements C1, C2, C3 vier Detektorpaare, bezogen auf die Figuren 4a bis 4d beispielsweise für die Abtastung des Codeelements C1 die Detektorelemente D1-D3 (Figur 4a), D2-D4 (Figur 4b), D3-D5 (Figur 4c) und D4-D6 (Figur 4d), entsprechend den Ausgangssignalen der Triggerbausteine T1 bis T4. Weiter können die Triggerbausteine T1 bis T12 in vier Gruppen eingeteilt werden, wobei an jeder Relativposition der Abtasteinheit AE zum Code C wenigstens eine Gruppe das aktuelle Codewort CW ausgibt. Entsprechend der Figuren 4a bis 4d besteht eine erste Gruppe aus den Triggerbausteinen T1, T5, T9, eine zweite Gruppe aus den Triggerbausteinen T2, T6, T10, eine dritte Gruppe aus den Triggerbausteinen T3, T7, T11 und eine vierte Gruppe aus den Triggerbausteinen T4, T8, T12. Die Bewertungseinheit BW ermittelt jeweils diejenige Gruppe, deren Ausgänge die wenigsten oder überhaupt keine Fehlersignale F aufweist und gibt diese als Ergebnis der Positionsmessung als Codewort CW aus.

Ob, und wenn ja, wie viele Fehlersignale F in einer Gruppe auftreten dürfen, hängt vom Code C ab. Ist dieser nicht redundant ausgeführt, ist kein Fehlersignal F zulässig, da für eine korrekte Positionsbestimmung jedes Codeelement C1, C2, C3 eindeutig identifizierbar sein muss. Bei einem redundant ausgeführten Code C ist die Anzahl der zulässigen Fehlersignale F davon abhängig, wie viele fehlerhafte Bits in einem Codewort CW durch die Redundanz ausgeglichen werden können.

Um die Vorteile der erfindungsgemäßen Anordnung von Trennelementen U1, U2 weiter zu verdeutlichen, ist in den Figuren 4b und 4c im Übergangsbereich zwischen den Teilbereichen C1A und C1 B des Codeelements C1 ein Schmutzpartikel SP dargestellt. Derartige Verschmutzungen können im Laufe der Lebensdauer einer Positionsmesseinrichtung beispielsweise durch Ablagerung von Abriebsmaterial, Schmiermitteltröpfchen oder von außen eindringendes Material entstehen. Im Folgenden soll angenommen werden, dass sich die Abtasteinheit AE relativ zum Code C von links nach rechts bewegt, was einem Übergang von Figur 4c zu Figur 4b entspricht. Weiter soll angenommen werden, dass es sich um eine Positionsmesseinrichtung handelt, welche nach dem Durchlichtprinzip arbeitet, wie es beispielsweise in Figur 1 gezeigt ist, wobei der Teilbereich C1A des Codeelements C1 opak und der Teilbereich C1 B des Codeelements C1 transparent ist.

Da der Schmutzpartikel SP nun ebenfalls opake Eigenschaften aufweist, kann allein durch die Auswertung des Ausgangssignals des Detektorelements D3 nicht mehr festgestellt werden, dass sich das Detektorelement D3 in einem Übergangsbereich befindet und für eine korrekte Positionsbestimmung nun zur Auswertung des Teilbereichs C1A des Codeelements C1 das Detektorelement D2 herangezogen werden müsste. Ohne das Trennelement U1 würde somit die Vergleichseinrichtung T3 in der in Figur 4b dargestellten Position weiterhin einen gültigen digitalen Wert, nämlich eine logische "0" ermitteln. Das Trennelement U1 führt jedoch zu einem Abfall des Abtastsignals S am Detektorelement D5 und somit zurAusgabe eines Fehlersignals F von der Triggereinheit T3.

Wie oben bereits beschrieben, können auch bei störungsfreiem Betrieb Triggerbausteine T1 bis T12 gültige digitale Werte ermitteln, die dennoch nicht zur Bestimmung des aktuellen Codeworts CW verwendet werden dürfen und zwar dann, wenn aufeinander folgende Codeelemente C1, C2, C3 die gleiche Codierung aufweisen. Das ist z.B. in Figur 4b bei der Vergleichseinrichtung T12 der Fall. In Verbindung mit aufgrund von Verschmutzungseffekten fälschlicherweise gewonnenen digitalen Werten erhöht sich die Wahrscheinlichkeit, dass zu einem Zeitpunkt zwei voneinander verschiedene Codewörter CW entstehen. Da in diesem Fall ein fehlerfreier und vor allem gefahrloser Betrieb der Maschine, an der die Positionsmesseinrichtung betrieben wird, nicht mehr gegeben ist, muss diese angehalten werden, beispielsweise durch ein Stoppsignal HALT, das die Bewertungseinheit BW an eine nicht dargestellte übergeordnete Steuerung ausgibt. Durch das Einfügen der Trennelemente U1, U2 wird die Wahrscheinlichkeit eines derartigen Ausfalls signifikant gesenkt und somit die Lebensdauer und Zuverlässigkeit der Positionsmesseinrichtung erhöht.

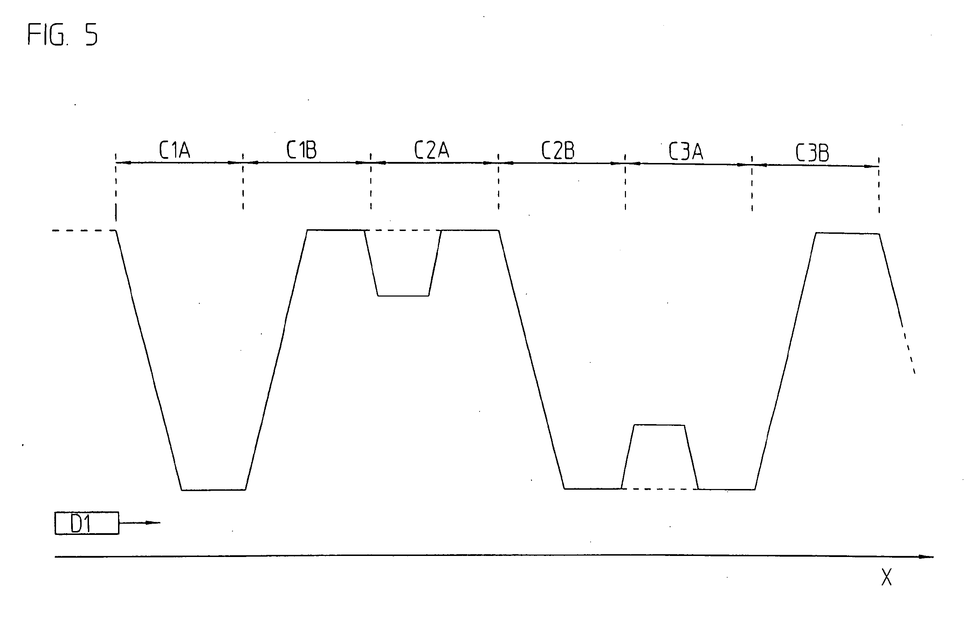

Anhand von Figur 5 soll nun noch einmal die Wirkungsweise der Trennelemente U1, U2 verdeutlicht werden. Die dargestellte Kurve zeigt den Verlauf der Signalintensität an einem Detektorelement D1 bis D14 bei einer relativen Bewegung der Abtasteinheit AE zum Code C in Messrichtung X vom Teilbereich C1A des Codeelements C1 bis zum Teilbereich C3B des Codeelements C3. Bei einem Code C, der nach dem Stand der Technik, also ohne die Trennelemente U1, U2, aufgebaut ist, würde die Intensitätskurve in den Übergangsbereichen zwischen den Teilbereichen C1B - C2A, bzw. C2B - C3A den gestrichelten Linien folgen und der Übergang wäre nicht erkennbar. Das Einfügen der Trennelemente U1, U2 führt zu einem signifikanten Signaleinbruch im Übergangsbereich zwischen den Teilbereichen C1B - C2A, bzw. zu einem Signalanstieg zwischen den Teilbereichen C2B - C3A. Dadurch wird der Übergang selbst dann detektierbar, wenn die Detektorelemente D1 bis D14 einzeln ausgewertet werden. Durch die Differenzschaltung von Detektorelementen D1 bis D14 wird, wie bereits beschrieben, durch die Trennelemente U1, U2 eine wesentlich höhere Sicherheit bei der Erkennung von Übergängen zwischen Codeelementen C1, C2, C3 erreicht.

Die Stärke der Ausprägung des von den Trennelementen U1, U2 verursachten Signaleinbruchs, bzw. Signalanstiegs ist weitgehend von der Größe der Trennelemente U1, U2 in Bezug auf die Größe der Detektorelemente D1 bis D14 abhängig, insbesondere vom Grad der Abdeckung der Detektorelemente D1 bis D14 von den Trennelementen U1, U2. In der Praxis muss sich der Einfluss der Trennelemente U1, U2 auf die Detektorsignale deutlich von Signalschwankungen, hervorgerufen durch Störeffekte, wie zum Beispiel Verschmutzung oder Signalrauschen, abheben. Es hat sich gezeigt, dass es zur sicheren Erkennung des Übergangs zwischen zwei Codeelementen, die im Übergangsbereich gleiche Eigenschaften aufweisen, vorteilhaft ist, wenn die Trennelemente U1, U2 so dimensioniert sind, dass bei maximaler Abdeckung eines Detektorelements D1 bis D14 durch ein Trennelement U1, U2 ein Signaleinbruch bzw. ein Signalanstieg von größer oder gleich 20% bezogen auf die maximale, bzw. minimale Amplitude des Detektorsignals bewirkt wird.

Um andererseits gewährleisten zu können, dass der Einfluss der Trennelemente U1, U2 auf die Detektorelemente D1 bis D14 vom Einfluss der Codeelemente C1, C2, C3, bzw. den Teilbereichen der Codeelemente C1A bis C3B unterscheidbar ist, ist es vorteilhaft, die Breite der Trennelemente U1, U2 wesentlich kleiner als die Breite der Codeelemente C1, C2, C3 zu wählen. Für die praktische Ausführung hat sich gezeigt, dass es besonders günstig ist, wenn die Breite der Trennelemente U1, U2 zwischen 5% und 8,5%, insbesondere zwischen 7% und 8% der Breite der Codeelemente C1, C2, C3 beträgt.

Die beiden Teilbereiche A, B eines jeden Codeelementes C1, C2, C3 können optisch abtastbar ausgebildet sein, wobei dann ein Teilbereich A für das Abtastlicht transparent oder reflektierend und der anderen Teilbereich B opak oder nicht reflektierend ausgebildet ist. Die Erfindung ist aber nicht auf das optische Abtastprinzip beschränkt, sie kann insbesondere auch auf magnetische Abtastprinzipien angewandt werden.

Die absolute Positionsmesseinrichtung kann zur Messung von linearen oder rotatorischen Bewegungen eingesetzt werden, wobei der Code C an einem der beweglichen Objekte und die Abtasteinrichtung AE am anderen der zu messenden Objekte angebracht ist. Der Code C kann dabei direkt an dem zu messenden Objekt angebracht sein oder auf einem Maßstab, der dann wiederum mit dem zu messenden Objekt gekoppelt ist.

Die zu messenden Objekte können dabei der Tisch und der Schlitten einer Werkzeug- oder einer Koordinatenmessmaschine sein oder auch der Rotor und der Stator eines Elektromotors.

## Patentansprüche

1. Positionsmesseinrichtung mit
- einem Code (C), bestehend aus einer Folge von in einer Messrichtung (X) hintereinander angeordneten Codeelementen (C1, C2, C3), bei dem wenigstens zwei aufeinander folgende Codeelemente (C1, C2, C3) jeweils ein Codewort (CW) mit einer Positionsinformation bilden und jedes Codeelement (C1, C2, C3) aus zwei in Messrichtung (X) aufeinander folgend angeordneten Teilbereichen (A, B) besteht, die zueinander komplementäre Eigenschaften aufweisen;
- einer Abtasteinrichtung (AE), die eine Detektoreinheit (D) mit Detektorelementen (D1 bis D14) zum Ablesen der wenigstens zwei ein Codewort (CW) bildenden Codeelemente (C1, C2, C3) des Codes (C) umfasst, sowie eine Auswerteeinrichtung (AW), in der aus den Abtastsignalen (S) der Detektorelemente (D1 bis D14) das Codewort (CW) mit der aktuellen Positionsinformation ermittelbar ist, indem einer ersten Abfolge der komplementär zueinander ausgebildeten Teilbereichen (A, B) ein erster digitaler Wert und einer zweiten Abfolge ein zweiter digitaler Wert zugeordnet ist, wobei die Abtasteinrichtung (AE) und der Code (C) in Messrichtung (X) relativ zueinander beweglich angeordnet sind,
**dadurch gekennzeichnet, dass**
- zwischen aneinandergrenzenden im Übergangsbereich gleiche Eigenschaften aufweisenden Codeelementen (C1, C2, C3) mit sich unterscheidenden digitalen Werten Trennelemente (U1, U2) mit zu den Codeelementen (C1, C2, C3) komplementären Eigenschaften eingefügt sind.

2. Positionsmesseinrichtung nach Anspruch 1, **dadurch gekennzeichnet, dass** die Auswerteeinrichtung (AW) Triggerbausteine (T1 bis T12) zur Bildung der Differenz der analogen Abtastsignale (S) von jeweils in Messrichtung (X) direkt aufeinander folgenden geradzahligen Detektorelementen (D2, D4, D6, D8, D10, D12, D14) sowie direkt aufeinander folgenden ungeradzahligen Detektorelementen (D1, D3, D5, D7, D9, D11, D13) umfasst.

3. Positionsmesseinrichtung nach Anspruch 2, **dadurch gekennzeichnet, dass** die Triggerbausteine (T1 bis T12) eine Fehlerprüfeinrichtung (P) aufweisen, die dazu ausgelegt ist, die Differenz der Abtastsignale (S) mit einem Vergleichswert (V) betragsmäßig zu vergleichen und bei betragsmäßigem Unterschreiten des Vergleichswertes (V) ein Fehlersignal (F) auszugeben.

4. Positionsmesseinrichtung nach Anspruch 3, **dadurch gekennzeichnet, dass** die Auswerteeinrichtung (AW) weiter eine Bewertungseinheit (BW) umfasst, an die die Triggerbausteine (T1 bis T12) entsprechend der Differenz der Abtastsignale (S) einen logischen Wert und/oder das Fehlersignal (F) ausgeben und in der Bewertungseinheit (BW) aufgrund dieser Informationen das Codewort (CW) ermittelbar ist.

5. Positionsmesseinrichtung nach Anspruch 4, **dadurch gekennzeichnet, dass** in der Bewertungseinheit (BW) aus den Eingangssignalen von den Triggerbausteinen (T1 bis T12) Gruppen (T1, T5, T9; T2, T6, T10; T3, T7, T11; T4, T8, T12) gebildet sind und das Codewort (CW) aus derjenigen Gruppe (T1, T5, T9; T2, T6, T10; T3, T7, T11; T4, T8, T12) ermittelbar ist, welche die wenigsten Fehlersignale (F) aufweist.

6. Positionsmesseinrichtung nach einem der vorhergehenden Ansprüche, **dadurch gekennzeichnet, dass** die beiden Teilbereiche (A, B) eines Codeelementes (C1, C2, C3) zueinander komplementäre optische Eigenschaften besitzen.

7. Positionsmesseinrichtung nach einem der vorhergehenden Ansprüche, **dadurch gekennzeichnet, dass** die Detektorelemente (D1 bis D14) in Messrichtung (X) in Abständen entsprechend der halben Länge eines Teilbereiches (A, B) angeordnet sind.

## Claims

1. A position measuring device comprising
- a code (C), consisting of a sequence of code elements (C1, C2, C3), which are arranged downstream from one another in a measuring direction (X), in the case of which at least two consecutive code elements (C1, C2, C3) in each case form a code word (CW) comprising a position information and each code element (C1, C2, C3) consists of two partial areas (A, B), which are arranged consecutively in measuring direction (X), and which encompass characteristics, which are complementary to one another;
- a scanning device (AE), which comprises a detector unit (D) comprising detector elements (D1 to D14) for reading the at least two code elements (C1, C2, C3) of the code (C), which form a code word (CW), as well as an evaluation device (AW), in which the code word (CW) comprising the current position information can be determined from the scanning signals (S) of the detector elements (D1 to D14), in that a first digital value is assigned to a first sequence of the partial areas (A, B), which are embodied complementary to one another, and a second digital value is assigned to a second sequence, wherein the scanning device (AE) and the code (C) are arranged so as to be movable relative to one another in measuring direction (X),
**characterized in that**
- separating elements (U1, U2) comprising characteristics, which are complementary to the code elements (C1, C2, C3), are inserted between adjacent code elements (C1, C2, C3), which encompass the same characteristics in the transition areas and which comprise different digital values.

2. The position measuring device according to claim 1, **characterized in that** the evaluation device (AW) comprises trigger components (T1 to T12) for forming the difference of the analog scanning signals (S) of respective even-numbered detector elements (D2, D4, D6, D8, D10, D12, D14), which are directly consecutive to one another in measuring direction (X), as well as of odd-numbered detector elements (D1, D3, D5, D7, D9, D11, D13), which are directly consecutive to one another.

3. The position measuring device according to claim 2, **characterized in that** the trigger components (T1 to T12) encompass an error test device (P), which is designed to compare the difference of the scanning signals (S) to a comparative value (V) with regard to their value and to output an error signal (F) when the comparative value (V) is undershot with regard to its value.

4. The position measuring device according to claim 3, **characterized in that** the evaluation device (AW) further comprises an evaluating unit (BW), to which the trigger components (T1 to T12) output a logical value and/or the error signal (F) according to the difference of the scanning signals (S) and the code word (CW) can be determined in the evaluating unit (BW) on the basis of this information.

5. The position measuring device according to claim 4, **characterized in that** groups (T1, T5, T9; T2, T6, T10; T3, T7, T11; T4, T8, T12) are formed in the evaluating unit (BW) from the input signals of the trigger components (T1 to T12) and **in that** the code word (CW) can be determined from that group (T1, T5, T9; T2, T6, T10; T3, T7, T11; T4, T8, T12), which encompasses the least amount of error signals (F).

6. The position measuring device according to one of the preceding claims, **characterized in that** the two partial areas (A, B) of a code element (C1, C2, C3) have optical characteristics, which are complementary to one another.

7. The position measuring device according to one of the preceding claims, **characterized in that** the detector elements (D1 to D14) are arranged in measuring direction (X) at intervals, which correspond to half the length of a partial area (A, B).

## Revendications

1. Dispositif de mesure de position avec
- un code (C) constitué d'une série d'éléments de code (C1, C2, C3) agencés les uns après les autres dans une direction de mesure (X), dans lequel au moins deux éléments de code consécutifs (C1, C2, C3) forment respectivement un mot de code (CW) avec une information de position, et chaque élément de code (C1, C2, C3) est constitué de deux zones partielles (A, B) agencées l'une après l'autre dans la direction de mesure (X) et présentant des propriétés complémentaires entre elles ;
- un dispositif de balayage (AE) comprenant une unité de détecteur (D) avec des éléments de détection (D1 à D14) pour lire les au moins deux éléments de code (C1, C2, C3) du code (C) formant un mot de code (CW), ainsi qu'un dispositif d'évaluation (AW) dans lequel peut être déterminé le mot de code (CW) avec l'information de position actuelle, à partir des signaux de balayage (S) des éléments de détection (D1 à D14), en attribuant une première valeur numérique à une première série de zones partielles (A, B) complémentaires entre elles et une deuxième valeur numérique à une deuxième série, le dispositif d'évaluation (AE) et le code (C) étant agencés de façon mobile l'un par rapport à l'autre dans la direction de mesure (X),
**caractérisé en ce que**
- des éléments de séparation (U1, U2) avec des propriétés complémentaires aux éléments de code (C1, C2, C3) sont insérés entre des éléments de code (C1, C2, C3) adjacents présentant des propriétés identiques dans la zone de transition, avec des valeurs numériques distinctes.

2. Dispositif de mesure de position selon la revendication 1, **caractérisé en ce que** le dispositif d'évaluation (AW) comprend des éléments de déclenchement (T1 à T12) pour la formation de la différence des signaux de balayage analogiques (S) des éléments de détection pairs (D2, D4, D6, D8, D10, D12, D14) directement consécutifs et des éléments de détection impairs (D1, D3, D5, D7, D9, D11, D13) directement consécutifs, respectivement dans la direction de mesure (X).

3. Dispositif de mesure de position selon la revendication 2, **caractérisé en ce que** les éléments de déclenchement (T1 à T12) comportent un dispositif de vérification des erreurs (P), conçu pour comparer la différence entre les signaux de balayage (S) et une valeur de comparaison (V) et pour délivrer un signal d'erreur (F) en cas de passage sous la valeur de comparaison (V).

4. Dispositif de mesure de position selon la revendication 3, **caractérisé en ce que** le dispositif d'évaluation (AW) comprend en outre une unité d'appréciation (BW), à laquelle les éléments de déclenchement (T1 à T12) délivrent une valeur logique et/ou le signal d'erreur (F) selon a différence des signaux de balayage (S), et **en ce que** le mot de code (CW) peut être déterminé dans l'unité d'appréciation (BW) sur la base de cette information.

5. Dispositif de mesure de position selon la revendication 4, **caractérisé en ce que** des groupes (T1, T5, T9 ; T2, T6, T10 ; T3, T7, T11 ; T4, T8, T12) sont formés dans l'unité d'appréciation (BW) à partir des signaux d'entrée des éléments de déclenchement (T1 à T12), et le mot de code (CW) peut être déterminé à partir du groupe (T1, T5, T9 ; T2, T6, T10 ; T3, T7, T11 ; T4, T8, T12) comportant le moins de signaux d'erreur (F).

6. Dispositif de mesure de position selon l'une des revendications précédentes, **caractérisé en ce que** les deux zones partielles (A, B) d'un élément de code (C1, C2, C3) possèdent des propriétés optiques complémentaires entre elles.

7. Dispositif de mesure de position selon l'une des revendications précédentes, **caractérisé en ce que** les éléments de détection (D1 à D14) sont agencés par intervalles correspondant à la moitié de la longueur d'une zone partielle (A, B), dans la direction de mesure (X).
